# EUROPÄISCHE PATENTSCHRIFT

(11) **EP 1 409 112 B1**
(45) Veröffentlichungstag und Bekanntmachung des Hinweises auf die Patenterteilung: **12.09.2007**
(21) Anmeldenummer: 02716752.7
(22) Anmeldetag: 08.02.2002
(51) Int. Cl.: B01D 46/24

(54) **ZYLINDRISCHE FILTERPATRONE MIT STÜTZROHR**
CYLINDRICAL FILTER CARTRIDGE WITH A SUPPORT TUBE
CARTOUCHE FILTRANTE CYLINDRIQUE AVEC TUBE SUPPORT

(30) Priorität: 13.02.2001 DE 10106526
(43) Veröffentlichungstag der Anmeldung: 21.04.2004
(73) Patentinhaber: Mann + Hummel GmbH, 71638 Ludwigsburg (DE)
(72) Erfinder: BLUM, Ralf, 71640 Ludwigsburg (DE); GOTTWALD-GRILL, Renate, 74321 Bietigheim-Bissingen (DE); HUBER, Matthäus, 94419 Reisbach (DE); LUKA, Helmut, 71672 Marbach (DE); STRASSENBERGER, Norbert, 84166 Adlkofen (DE)
(86) Internationale Anmeldenummer: PCT/EP2002/001362
(87) Internationale Veröffentlichungsnummer: WO 2002/064234

(56) Entgegenhaltungen:
- DE-A- 4 441 608
- DE-U- 29 780 439

## Beschreibung

### Stand der Technik

Die Erfindung betrifft eine zylindrische Filterpatrone mit einem Stützrohr und zumindest einer ringförmigen Endscheibe, wobei die Enden des Stützrohres in die Endscheibe eingebettet sind, nach der Gattung des Patentanspruches 1. Außerdem betrifft die Erfindung einen Filter, der die oben genannte Patrone enthält, nach der Gattung des Patentanspruches 6. Zuletzt betrifft die Erfindung ein Verfahren zur Herstellung des oben genannten Filtereinsatzes nach der Gattung des Patentanspruches 8.

Filterpatronen der Eingangs genannten Art sind allgemein bekannt. Zum Beispiel zeigt die DE 297 80 439 entsprechend der Darstellungen in den Figuren eine Filterpatrone, die ein ringförmig geschlossenes Filtermedium aufweist, welches an den Stirnseiten durch elastische Endscheiben begrenzt ist. Diese können zum Beispiel aus einem PUR-Schaum gefertigt sein, wobei die Einbettung der Stirnseiten in diese Endscheiben unproblematisch ist. Weiterhin können die Enden des Stützrohres, welches im Inneren der Patrone angeordnet ist, in die Endscheibe eingebettet werden. Auf diese Weise läßt sich kostengünstig eine Befestigung des Stützrohres in der Patrone erreichen. Das Stützrohr führt gleichzeitig zu einer Stabilisierung der Endscheibe, so dass diese im Inneren Bereich radiale Dichtflächen aufweisen kann. Diese Dichtflächen können mit einem Stutzen im Gehäuse kommunizieren.

Für die elastischen Endscheiben können unterschiedliche Werkstoffe verwendet werden. Gemäß DE 44 41 608 C2 ist die Herstellung der Endscheiben auch durch folienartige Rohlinge möglich, die durch einen Aushärtungsprozess aufquellen und auf diese Weise fest mit dem Filtermedium verbunden werden. Das zur Herstellung dieser Filterpatronen verwendete Herstellungsverfahren ist besonders kostengünstig in der Anwendung. Allerdings weisen die einmal ausgehärteten Endscheiben nur noch eine begrenzte Elastizität auf. Daher kann ein Stützrohr in der eingangs beschriebenen Weise nicht montiert werden, da die elastische Verformung der Endscheibe zum Beispiel durch eine radiale Dichtfläche an der Innenkante zu einem Ausreißen der Ränder des wenig elastischen Stützrohres führen würde. Die Funktion der Filterpatrone ist in einem solchen Fall nicht mehr gegeben, da keine zuverlässige Abdichtung zwischen Roh- und Reinseite der Filterpatrone mehr erfolgen kann.

Aufgabe der Erfindung ist es daher, eine Filterpatrone mit einem in die elastische Endscheibe eingebetteten Stützrohr zu schaffen, wobei die Verbindung zwischen Stützrohr und Endscheibe zuverlässig ist und einer elastischen Deformation der Endscheibe stand hält. Diese Aufgabe wird durch die Merkmale des Patentanspruches 1 sowie 6 gelöst. Außerdem wird gemäß Anspruch 8 ein Verfahren zur Herstellung einer solchen Filterpatrone beansprucht.

### Vorteile der Erfindung

Die erfindungsgemäße Filterpatrone ist zylindrisch ausgeführt. Dies bedeutet nicht unbedingt, dass diese kreiszylindrisch sein muß. Es sind auch andere Querschnitte denkbar. Zum Beispiel kann die Patrone einen ovalen Querschnitt besitzen. Das Filtermedium ist im Inneren durch ein Stützrohr gestützt und kann unterschiedlich ausgeführt sein. Beispielsweise kann ein gefaltetes Filtermedium zum Einsatz kommen, wobei hierbei eine Sternfaltung bevorzugt wird. Eine andere Möglichkeit ist die Verwendung eines gewickelten Filtermediums, wobei das Stützrohr als Kern für die Wicklung zum Einsatz kommen kann. Zuletzt ist auch die Möglichkeit gegeben, das Filtermedium aus einem Stück zum Beispiel aus Schaumstoff herzustellen. Das Stützrohr muß weiterhin zumindest eine elastische ringförmige Endscheibe aufweisen. Diese Endscheibe ist mit der Stirnseite des Filtermediums verbunden, indem dieses in die Endscheibe eingebettet ist. Ebenso ist das Stützrohr mit seinem einen Ende in die Endscheibe eingebettet. Die gegenüberliegende Seite der Filterpatrone kann ebenfalls mit einer Endscheibe versehen werden, wodurch eine vorteilhafte Ausführungsform entsteht. Jedoch sind auch andere Verschlüsse der zweiten Stirnseite möglich, die eine Abdichtung zwischen Roh- und Reinseite des Filtermediums erlauben.

Die Filterpatrone ist dadurch gekennzeichnet, daß das Ende des Stützrohres, welches in die Endscheibe eingebettet ist, einen Absatz aufweist, durch den ein Endbereich des Stützrohrs geschaffen wird. Dieser Endbereich erhält durch den Absatz im Vergleich zu dem restlichen Stützrohr eine verringerte Wandstärke. Der wesentliche Vorteil der beschriebenen Gestaltung des Stützrohrs liegt darin, daß der durch die Einbettung in die Endscheibe geschaffene Verband eine höhere Stabilität insbesondere bei elastischer Verformung der Endscheibe erhält. Dies kommt zum einen durch eine Steigerung der Elastizität des Endbereiches des Stützrohres zustande, da dieses eine verringerte Wandstärke aufweist. Der Haupteffekt wird jedoch durch die Absätze erzeugt, welche ebenfalls in die Endscheibe eingebettet sind. Diese vergrößern die Oberfläche, an der die Endscheibe an dem Stützrohr haften kann. Außerdem stellen Sie eine Stützfläche dar, an die die Endscheibe bei einer elastischen Verformung angedrückt werden kann. Daher läßt sich der Verband zwischen Endscheibe und Stützrohr im Vergleich zu Gestaltungen gemäß dem Stand der Technik auch bei höheren Kräften einsetzen.

Zur Verwirklichung des erfinderischen Gedankens ist zumindest ein Absatz im Endbereich des Stützrohres notwendig. Gemäß einer besonders vorteilhaften Ausgestaltung kann dieser Absatz auf der Innenseite des Stützrohres angebracht werden, während die Außenseite des Stützrohres im Endbereich keine Durchmesseränderung erfährt. Dies bedeutet, dass auf der Außenseite des Stützrohres der Endbereich übergangslos in den Hauptbereich des Stützrohres übergeht. Es ist jedoch genauso denkbar, sowohl auf der Innenseite als auch auf der Außenseite des Stützrohres einen Absatz anzuordnen. Die Absätze müssen in Abhängigkeit der an den Endscheiben auftretenden Belastungsrichtung gewählt werden. Die Belastungsrichtung wiederum hängt davon ab, auf welche Weise die Filterpatrone im Gehäuse montiert wird.

Gemäß einer vorteilhaften Ausgestaltung der Erfindung wird durch den mindestens einen Absatz die Wandstärke des Stützrohres zum Ende hin halbiert. Durch diese Maßnahme ist diese Wandstärke des Stützrohres auch im Endbereich noch genügend groß, um einerseits Fertigungstoleranzen auszugleichen und andererseits eine genügende Reststabilität aufzuweisen. Dabei ist es vorteilhaft, dass Ende des Stützrohres abzurunden, um weiterhin Kanten zu vermeiden, die eventuell zu einem Anriß der Endscheibe führen würden. Der Kraftfluß zwischen Endscheibe und Stützrohr kann somit bei einer elastischen Deformation der Endscheibe ohne Spannungsspitzen in den einzelnen Bauteilen übertragen werden.

Besonders vorteilhaft ist eine geometrische Ausgestaltung des Endbereiches des Stützrohres, in der der Endbereich in axialer Richtung gerade doppelt so lang ist wie die verringerte Wandstärke dick ist. Diese geometrischen Verhältnisse führen zu einer besonders günstigen Kraftleitung zwischen Endscheibe und Stützrohr. Hierbei muß das beschriebene geometrische Verhältnis selbstverständlich nicht genau eingehalten werden. Diese außerordentlich günstigen Verhältnisse der Kraftleitung können auch bei einer Abweichung von +/- 20% dieser geometrischen Bedingung noch erreicht werden.

Besonders vorteilhaft lassen sich die beschriebenen Effekte der günstigen Kraftleitung nutzen, wenn an der Innenkante, die durch die ringförmige Endscheibe gebildet ist, eine Dichtfläche angrenzt. Diese erstreckt sich damit auf dem Zylindermantel der zylindrischen Aussparung im Inneren der ringförmigen Scheibe. Diese Dichtfläche kommuniziert entsprechend mit dem Gehäuse des Filters. Vorteilhafterweise kann zu diesem Zweck in der Gehäusestruktur, die den Filter bildet, ein Stutzen vorgesehen sein, auf den die Filterpatrone geschoben werden kann. Damit läßt sich ein besonders einfaches Montageverfahren für die Filterpatrone verwirklichen. Der Stutzen kann mit konischen Flächen im Endbereich versehen sein, um das Aufschieben der Filterpatrone noch zu erleichtern.

Die beschriebenen vorteilhaften Wirkungen lassen sich selbstverständlich auch mit einem Filter erreichen, in den die erfindungsgemäße Filterpatrone eingebaut ist. Ein solcher Filter weist in bekannter Weise einen Einlaß und einen Auslaß auf, wobei die Filterpatrone derart in die Gehäusestruktur eingebaut ist, dass bei der Durchströmung des Fluides vom Einlaß zum Auslaß eine Filterung desselben stattfindet. Der Filter kann mit auswechselbarer Filterpatrone, also öffenbarem Gehäuse, oder auch als Wegwerffilter mit nicht öffenbaren Gehäuse ausgeführt sein. Weiterhin kann die Gehäusestruktur zum Beispiel im Anwendungsfall in einem Kraftfahrzeug durch die Brennkraftmaschine selbst gebildet sein, so dass keine gesonderte Gehäusestruktur vorgesehen ist.

Ein vorteilhaftes Verfahren zur Herstellung der erfindungsgemäßen Filterpatrone sieht vor, die Endscheibe aus einem Rohling zu fertigen, welcher aus einer elastischer Masse besteht. Diese ist jedoch schon genügend gefestigt, dass sie als Folie hergestellt werden kann. Die Rohlinge können aus dieser Folie ausgestochen werden und zur Verbindung mit Filtermedium und Stützrohr in eine hierfür vorgesehene Form eingebracht werden. Die Handhabung ist dabei besonders einfach, insbesondere im Vergleich zu Materialien für die Endscheibe die in diese Form gegossen werden müssten. Die Verbindung zwischen Rohling und Filtermedium sowie Stützrohr erfolgt durch einen Aushärtungsprozeß unter Temperatureinwirkung bei dem die Endscheibe gleichzeitig eine Ausdehnung erfährt, wodurch die besagten Bauteile eingebettet werden. Nach der Aushärtung bleibt der Endscheibe eine gewisse Restelastizität, die unter anderem auch zu Erzeugung einer Dichtung herangezogen werden kann. Diese Dichtung liegt, wie beschrieben, zum Beispiel an der Innenkante der ringförmigen Endscheibe.

Vorteilhaft ist die Herstellung des beschriebenen Rohlings aus einer Mischung aus Nitrilkautschuk und Phenolharz. Besonders vorteilhaft ist dabei ein Mischungsverhältnis von Nitrilkautschuk zu Phenolharz im Bereich von 1: 0,8 - 1 : 3.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: den erfindungsgemäßen Filter mit eingebauter Filterpatrone im Mittelschnitt,
- Figur 2: das Detail X gemäß Figur 1 und
- Figur 3: eine alternative Gestaltung des Endbereiches des Stützrohres im Schnitt in einer Darstellung in Anlehnung an Figur 2.

### Beschreibung der Ausführungsbeispiele

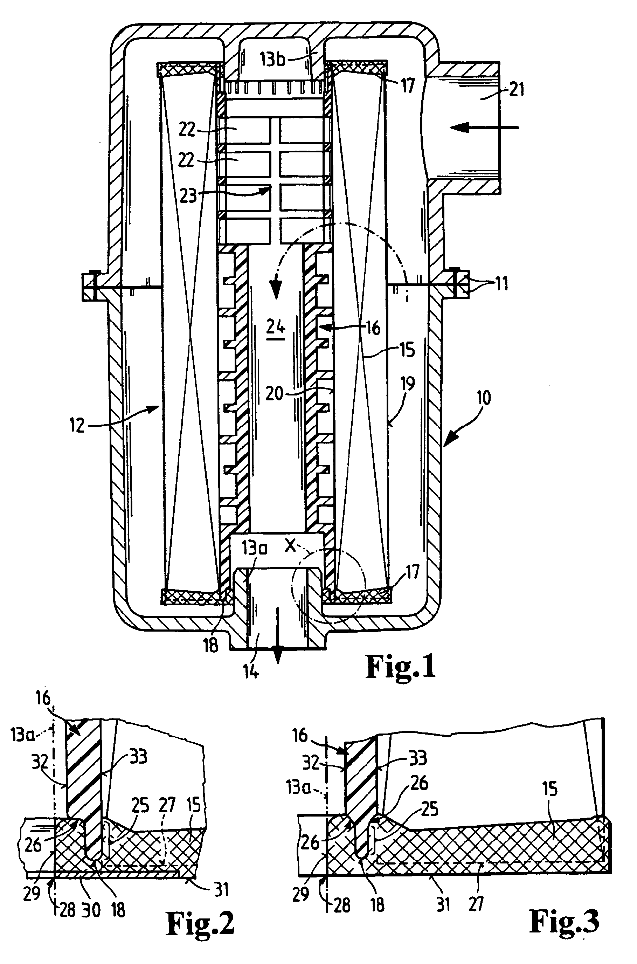

In Figur 1 ist in stark vereinfachter Darstellung ein Filter des Wegwerftyps dargestellt, dass heißt die Filterpatrone kann nicht ausgewechselt werden. Der Filter weist eine Gehäusestruktur 10 auf, die aus zwei Hälften besteht, die über einen Flansch 11 miteinander verschweißt sind. In diese Gehäusestruktur ist eine Filterpatrone 12 eingebaut. Die Montage der Filterpatrone erfolgt besonders einfach vor Verschweißen des Gehäuses durch Aufstecken auf zwei Stutzen 13a, b, wobei der Stutzen 13a in einen Auslaß 14 für das gefilterte Fluid mündet.

Die Filterpatrone besteht aus einem Filtermedium 15 welches sich durch ein gefaltetes Filterpapier ergibt, aus einem Stützrohr 16 und Endscheiben 17. Eine Abdichtung des Filtermediums 15 sowie dessen Verbindung mit dem Stützrohr 16 wird durch die Endscheiben 17 erreicht, indem das Filtermedium 15 und Enden 18 des Stützrohres in diese eingebettet sind. Dadurch werden eine Rohseite 19 und eine Reinseite 20 des Filtermediums dichtend voneinander getrennt.

Der Weg des Fluids von einem Einlaß 21 zum Auslaß 14 ist durch Pfeile angedeutet. Nachdem das Fluid durch den Einlaß in das Gehäuse gelangt ist, tritt dieses von der Rohseite 19 des Filtermediums auf die Reinseite 20, von wo aus es durch Durchbrüche 22 im Stützrohr in einen Innenraum 23, gebildet durch den mantelförmigen Aufbau des Filtermediums, geleitet wird. Die Durchbrüche 22 sind nur im oberen Teil des Stützrohres angeordnet. Der untere Teil des Stützrohres bildet eine Kanalstruktur 24, die über die entsprechende Endscheibe 17 mit dem Stutzen 13a dichtend verbunden ist. Durch den Auslaß 14 verläßt das gefilterte Fluid die Gehäusestruktur 10.

Die Gestaltung des Endes 18 des Stützrohres 16 ist in Figur 2 genauer dargestellt. Das Ende 18 schließt einen Endbereich 25 mit verminderter Wandstärke nach unten ab, wobei der Endbereich durch einen Absatz 26 gebildet wird. Der gesamte Endbereich 25 mit samt dem Absatz 26 ist in die Endscheibe 15 eingebettet, wodurch eine zuverlässige Haftung zwischen den beiden Bauteilen zustande kommt. Weiterhin ist eine Stirnseite 27 des Filtermediums angedeutet, welche ebenfalls in die Endscheibe 15 eingebettet ist.

Die Endscheibe 15 weist weiterhin eine Innenkante 28 auf, die sich an der zentral angebrachten Öffnung ergibt. Diese begrenzt eine Dichtfläche 29 in dieser Öffnung, welche sich bei Einbau gemäß Figur 1 in eine Gehäusestruktur 10 radial an den Stutzen 13a anlegt. Weiterhin ist ein Stützring 30 in die stirnseitige Fläche 31 der Endscheibe 15 eingebettet, der zu einer zusätzlichen Versteifung der Endscheibe 15 führt.

Figur 3 zeigt einen der Figur 2 ähnlichen Aufbau des Endes 18 des Stützrohrs 16, wobei Absätze 26 jeweils auf einer Innenseite 32 und einer Außenseite 33 des Stützrohrs angebracht sind. Hierdurch ist in der beschriebenen Weise der Endbereich 25 gebildet. Der weitere Aufbau des dargestellten Verbundes zwischen Endscheibe 15 und Stützrohr 16 entspricht der Figur 2.

## Patentansprüche

1. Zylindrische Filterpatrone (12), aufweisend
- ein ringförmig ausgebildetes Filtermedium (15), welches den Mantel der Filterpatrone bildet und welches abgedichtete Stirnseiten (27) zur Trennung einer mit zu filterndem Fluid beaufschlagten Rohseite (19) von einer Reinseite (20), von der das gefilterte Fluid abströmt, aufweist,
- ein Stützrohr (16), welches in einem durch das Filtermedium gebildeten Innenraum (23) angeordnet ist und Durchbrüche (22) aufweist, die das Filtermedium (15) mit dem Innenraum kommunizierend verbinden,
- mindestens eine elastische, ringförmige Endscheibe (17), in die eine der Stirnseiten des Filtermediums (15) sowie eines der Enden des Stützrohres (16) eingebettet sind,
**dadurch gekennzeichnet, dass** das besagte, eingebettete Ende (18) im Bereich seiner Einbettung mindestens einen Absatz (26) aufweist, derart, dass
- der Absatz selbst ebenfalls in die Endscheibe (17) eingebettet ist,
- der Absatz eine Verringerung der Wandstärke des Stützrohres zum Ende hin erzeugt, die als Endbereich (25) bezeichnet wird.

2. Filterpatrone nach Anspruch 1, **dadurch gekennzeichnet, dass** durch den mindestens einen Absatz (26) die Wandstärke des Stützrohres (16) zum Ende hin halbiert wird.

3. Filterpatrone nach einem der vorherigen Ansprüche, **dadurch gekennzeichnet, dass** der Endbereich (25) des Stützrohres (16) mit verringerter Wandstärke in seiner Länge der dem Doppelten der verringerten Wandstärke entspricht.

4. Filterpatrone nach einem der vorherigen Ansprüche, **dadurch gekennzeichnet, dass** der Absatz (26) auf einer Innenseite (32) des Stützrohres liegt, während eine Außenseite (33) des Stützrohres mit gleichbleibendem Durchmesser in den Endbereich übergeht.

5. Filterpatrone nach einem der vorherigen Ansprüche, **dadurch gekennzeichnet, dass** durch eine Innenkante (28), die die ringförmige Endscheibe (17) nach innen hin begrenzt, eine radiale Dichtfläche (29) gebildet ist.

6. Filter, aufweisend eine Gehäusestruktur (10) mit einem Einlass (21) für zu filterndes Fluid und einen Auslass (14) für gefiltertes Fluid, in die eine Filterpatrone derart eingebaut ist, dass eine mit dem Einlass kommunizierende Rohseite (19) der Filterpatrone und eine mit dem Auslass kommunizierende Reinseite (20) des Filters dichtend voneinander getrennt sind, **dadurch gekennzeichnet, dass** eine Filterpatrone gemäß einem der vorherigen Ansprüche in die Gehäusestruktur eingebaut ist.

7. Filter nach Anspruch 6 **dadurch gekennzeichnet, dass** die Gehäusestruktur einen Stutzen (13a) aufweist, auf den die Filterpatrone gemäß Anspruch 5 mit der radialen Dichtfläche (29) aufgeschoben ist.

8. Verfahren zur Herstellung eines Filterpatrone gemäß einem der Ansprüche 1 bis 5, **dadurch gekennzeichnet, dass** die Endscheibe (17), in die das Stützrohr (16) mit seinem Endbereich (25) sowie die Stirnseite (27) des Filtermediums eingebettet werden soll, aus einem aus einer elastischen Masse gefertigten Rohling besteht, der zur Einbettung der besagten Bauteile einem Aushärtungsprozess, insbesondere einer Erwärmung unterworfen wird, wodurch eine feste Verbindung durch eine räumliche Ausdehnung des Rohlings in Richtung der besagten einzubettenden Teile erzeugt wird.

9. Verfahren nach Anspruch 8, **dadurch gekennzeichnet, dass** der verwendete Rohling aus einer Mischung aus Nitrilkautschuk und Phenolharz gebildet ist.

10. Verfahren nach Anspruch 9, **dadurch gekennzeichnet, dass** das Mischungsverhältnis von Nitrilkautschuk zu Phenolharz im Bereich von 1 : 0,8 bis 1 : 3 liegt.

## Claims

1. Cylindrical filter cartridge (12), comprising
- an annular filter medium (15), which forms the outer surface of the filter cartridge and which includes sealed end faces (27) for separating a filtered side (19), which is impinged upon with liquid to be filtered, from a filtered side (20), from which the filtered liquid flows away,
- a support tube (16), which is disposed in an interior (23) that is formed by the filter medium and includes openings (22), which connect the filter medium (15) to the interior in a communicating manner,
- at least one resilient, annular end disc (17), in which one of the end faces of the filter medium (15) as well as one of the ends of the support tube (16) are embedded, **characterised in that** the said embedded end (18) includes at least one shoulder (26) in the region of its embedding in such a manner that
- the shoulder itself is also embedded in the end disc (17),
- the shoulder creates a reduction in the wall thickness of the support tube towards the end, which is referred to as end region (25).

2. Filter cartridge according to claim 1, **characterised in that** the wall thickness of the support tube (16) towards the end is halved by means of the at least one shoulder (26).

3. Filter cartridge according to one of the preceding claims, **characterised in that** the length of the end region (25) of the support tube (16) with reduced wall thickness corresponds to double the reduced wall thickness.

4. Filter cartridge according to one of the preceding claims, **characterised in that** the shoulder (26) rests on an inside (32) of the support tube (16), whereas an outside (33) of the support tube with constant diameter graduates into the end region.

5. Filter cartridge according to one of the preceding claims, **characterised in that** an inside edge (28), which limits the annular end disc (17) inwards, forms a radial sealing surface (29).

6. Filter, comprising a housing structure (10) with an inlet (21) for liquid to be filtered and an outlet (14) for filtered liquid, in which housing structure a filter cartridge is installed in such a manner that an unfiltered side (19) of the filter cartridge that communicates with the inlet and a filtered side (20) of the filter that communicates with the outlet are sealingly separated from each other, **characterised in that** a filter cartridge according to one of the preceding claims is installed in the housing structure.

7. Filter according to claim 6, **characterised in that** the housing structure includes a connection piece (13a), onto which is slipped the filter cartridge according to claim 5 with the radial sealing surface (29).

8. Method for producing a filter cartridge according to one of claims 1 to 5, **characterised in that** the end disc (17), into which the support tube (16) with its end region (25) as well as the end face (17) of the filter medium is to be embedded, is produced from a blank that is manufactured from a resilient compound, the said blank, for the embedding of the said components, being subject to an age-hardening process, more especially a heating process, a fixed connection thereby being created by means of a spatial expansion of the blank in the direction of the said parts to be embedded.

9. Method according to claim 8, **characterised in that** the blank used is formed from a mixture of nitrile rubber and phenolic resin.

10. Method according to claim 9, **characterised in that** the mixture ratio of nitrile rubber to phenolic resin is in the range of between 1 : 0.8 and 1 : 3.

## Revendications

1. Cartouche de filtre 12 cylindrique comprenant:
- un milieu filtrant 15 de forme annulaire constituant l'enveloppe de la cartouche de filtre et ayant des faces frontales 27 rendues étanches pour séparer le côté non filtré 19 recevant le liquide à filtrer du côté filtré 20 d'où s'échappe le liquide filtré,
- un tube d'appui 16 installé dans le volume intérieur 23 formé par le milieu filtrant et ayant des passages 22 reliant le milieu filtrant 15 de façon à communiquer avec le volume intérieur,
- au moins un disque d'extrémité 17 annulaire, élastique, dans lequel sont intégrées l'une des faces frontales du milieu filtrant 15 et l'une des extrémités du tube d'appui 16,
**caractérisée en ce que**
l'extrémité 18 intégrée présente au niveau de son intégration au moins un épaulement 26 tel que :
- l'épaulement soit lui-même également intégré dans le disque d'extrémité 17, et
- l'épaulement produit sur l'épaisseur de paroi de l'extrémité du tube d'appui une réduction qui forme la zone d'extrémité 25.

2. Cartouche de filtre selon la revendication 1,
**caractérisée en ce qu'**
au moins un épaulement 26 divise par deux l'épaisseur de la paroi de l'extrémité du tube d'appui 16.

3. Cartouche de filtre selon l'une quelconque des revendications précédente,
**caractérisée en ce que**
la zone d'extrémité 25 du tube d'appui 16, d'épaisseur de paroi réduite, a une longueur double de l'épaisseur de paroi réduite.

4. Cartouche de filtre selon l'une quelconque des revendications précédente,
**caractérisée en ce que**
l'épaulement 26 est situé sur le côté intérieur 32 du tube d'appui, alors que le côté extérieur 33 du tube d'appui se poursuit avec le même diamètre jusque dans la zone d'extrémité.

5. Cartouche de filtre selon l'une quelconque des revendications précédente,
**caractérisée par**
une arête intérieure 28 délimitant le disque d'extrémité annulaire 17 vers l'intérieur et formant une surface d'étanchéité radiale 29.

6. Filtre ayant une structure de boîtier 10 avec une entrée 21 pour le liquide à filtrer et une sortie 24 pour le liquide filtré et recevant une cartouche de filtre qui sépare de manière étanche l'un de l'autre, un côté non filtré 19 communiquant avec l'entrée dans la cartouche de filtre, et un côté nettoyé 20 communiquant avec la sortie du filtre
**caractérisé par**
une cartouche de filtre selon l'une quelconque des revendications précédentes dans la structure de boîtier.

7. Filtre selon la revendication 6,
**caractérisé en ce que**
la structure de boîtier comporte un ajutage 13a sur lequel la cartouche de filtre selon la revendication 5 est emmanchée avec la surface d'étanchéité radiale 29.

8. Procédé de fabrication d'une cartouche de filtre selon l'une quelconque des revendications 1 à 5,
**caractérisé en ce que**
le disque d'extrémité 17 dans lequel on veut intégrer la zone d'extrémité 25 du tube d'appui 16 ainsi que la face frontale 27 du milieu filtrant, est constitué d'une ébauche en matière élastique qui pour intégrer les composants indiqués, est soumise à un procédé de durcissement, en particulier un échauffement pour réaliser une liaison solide par dilatation en trois dimensions de l'ébauche dans la direction des parties à intégrer.

9. Procédé selon la revendication 8,
**caractérisé en ce que**
l'ébauche utilisée est un mélange de caoutchouc nitrile et de résine phénolique.

10. Procédé selon la revendication 9,
**caractérisé en ce que**
le rapport de mélange de caoutchouc nitrile à la résine phénolique est de l'ordre 1 : 0,8 jusqu'à 1 : 3.
